# EUROPÄISCHE PATENTSCHRIFT

(11) **EP 3 371 457 B1**
(45) Veröffentlichungstag und Bekanntmachung des Hinweises auf die Patenterteilung: **30.12.2020**
(21) Anmeldenummer: 15788030.3
(22) Anmeldetag: 02.11.2015
(51) Int. Cl.: F04C 25/02, F04C 29/12, F04C 18/344

(54) **KFZ-VAKUUMPUMPE**
CAR VACUUMPUMP
POMPE À VIDE POUR UNE VOITURE

(43) Veröffentlichungstag der Anmeldung: 12.09.2018
(73) Patentinhaber: Pierburg Pump Technology GmbH, 41460 Neuss (DE)
(72) Erfinder: HAMMER, Stefan, 40219 Düsseldorf (DE); PILENZ, Wolfgang, 47506 Neukirchen-Vluyn (DE); DES, Enver, 41469 Neuss (DE); SOMMER, Stefan, 40627 Düsseldorf (DE); JOB, Moritz Johannes, 40476 Düsseldorf (DE)
(74) Vertreter: terpatent Patentanwälte ter Smitten Eberlein-Van Hoof Rütten Daubert
(86) Internationale Anmeldenummer: PCT/EP2015/075365
(87) Internationale Veröffentlichungsnummer: WO 2017/076418

(56) Entgegenhaltungen:
- WO-A1-2006/129333
- WO-A1-2008/080492
- WO-A1-2014/154239
- JP-A- 2005 226 536
- US-A1- 2012 060 683
- US-A1- 2015 211 520

## Beschreibung

Die vorliegende Erfindung betrifft eine Kfz-Vakuumpumpe mit einem Pumpraum, in dem ein Pumpenrotor verdichtend rotiert, und einem Auslassraum, in den das verdichtete Gas aus dem Pumpraum austritt. Die Vakuumpumpe weist eine Trennwand, welche den Pumpraum von dem Auslassraum abtrennt, und wenigstens ein als Rückschlagventil ausgebildetes Auslassventil in der Trennwand auf, durch das das komprimierte Gas aus dem Pumpraum in den Auslassraum austritt.

Eine Kfz-Vakuumpumpe generiert in einem Kraftfahrzeug (Kfz) unabhängig von dem Betriebszustand eines Verbrennungsmotors einen Unterdruck von beispielsweise absolut 100 Millibar, der beispielsweise zum Betrieb eines pneumatischen Bremskraftverstärkers und/oder anderer pneumatisch betriebener Nebenaggregate benötigt wird.

Als Ventilkörper für das Auslassventil wird bei einer solchen Vakuumpumpe aufgrund der einfachen Konstruktion und der hohen Zuverlässigkeit häufig eine Blattfeder verwendet, welche in einer Schließstellung an einem um die Auslassöffnung ausgebildeten Ventilsitz anliegt. Die Betätigung des Auslassventils erfolgt pneumatisch. Unerwünscht bei solchen Öffnungs- und Schließvorgängen ist die dabei auftretende Geräuschemission, welche beim Öffnen hauptsächlich durch die Expansion des Öl/Luftgemischs verursacht wird.

Aus der EP 1 953 389 A2 ist eine Vakuumpumpe bekannt, bei welcher zur Geräuschreduktion in der Blattfeder des Auslassventils ein Loch vorgesehen ist, um die Druckdifferenz in diesem Bereich zu verringern.

Eine weitere Vakuumpumpe ist aus der DE 102 27 772 A1 bekannt. Zur Geräuschreduktion ist bei dieser Vakuumpumpe in der Nähe der Ventilöffnung ein Kanal ausgebildet, welcher den Pumpraum mit dem Auslassraum verbindet, um die Öffnungs- und Schließbewegung der Blattfeder zu verlangsamen und die Druckdifferenz in diesem Bereich zu verringern.

Bei diesen Vakuumpumpen aus dem Stand der Technik besteht eine dauerhafte Verbindung zwischen dem Pumpraum und dem Auslassraum. Somit ist eine absolute Dichtigkeit des geschlossenen Auslassventils nicht gegeben. Daraus ergibt sich, dass dadurch der Pumpraum stets belüftet wird, wodurch der Wirkungsgrad der Pumpe signifikant verschlechtert wird.

Aus WO 2008/080492 ist eine Kfz-Vakuumpumpe bekannt, deren Auslassventil von einem Stützkörper und einem darunter verspannten Dichtkörper gebildet wird, der aus einem elastischen Material besteht und dehnbar ist.

Die Aufgabe der vorliegenden Erfindung liegt somit darin, eine leise Kfz-Vakuumpumpe mit gutem Wirkungsgrad zu schaffen.

Diese Aufgabe wird durch eine Kfz-Vakuumpumpe mit den Merkmalen nach dem unabhängigen Anspruch 1 gelöst.

Bei dieser Kfz-Vakuumpumpe ist ein Federkörper vorgesehen, welcher einen federkörperseitigen Anschlag aufweist, dessen Abstand zu einem Befestigungsort des Federkörpers größer ist als ein Abstand zwischen dem Befestigungsort und einem dazu nächstliegenden Öffnungsrand der Ventilöffnung. Gemäß der vorliegenden Erfindung ist der Öffnungsrand zwischen der Ventilöffnung und einem Ventilsitz, welcher als Teil des Gehäuses eine Auflagefläche für die Blattfeder ausbildet, vorgesehen.

Als nächstliegenden Öffnungsrand der Ventilöffnung im Sinne der vorliegenden Erfindung wird der Abschnitt des Öffnungsrandes verstanden, welcher den geringsten Abstand zum Befestigungsort hat. Der federkörperseitige Anschlag ist somit ausgehend von dem Befestigungsort hinter diesem Abschnitt des Öffnungsrandes vorgesehen.

Als federkörperseitiger Anschlag im Sinne der Erfindung wird eine konstruktive Ausgestaltung des Federkörpers verstanden, welche beispielsweise mit der Trennwand derart mechanisch zusammenwirkt, dass eine in Richtung einer Ventilsitzebene ausgerichtete Bewegungsrichtung der Blattfeder begrenzt ist. In einer Anschlagsposition, d.h. einer Position, in welcher der federkörperseitige Anschlag mit der z.B. Trennwand zusammenwirkt, ist die Blattfeder zu dem Ventilsitz ausgerichtet.

Die Blattfeder weist mit dem Ventilsitz eine Überlappung auf. Die Blattfeder liegt dadurch in einem geschlossenen und vorgespannten Zustand dichtend und in einem geschlossenen Ring an dem Ventilsitz an, so dass der Pumpraum bei geschlossenem Auslassventil nicht belüftet wird. Dadurch wird der Wirkungsgrad der Pumpe verbessert.

Durch die Möglichkeit, den federkörperseitigen Anschlag, ausgehend von dem Befestigungsort des Federkörpers, hinter einem Öffnungsrand der Ventilöffnung anordnen zu können, kann ein großer Hebelarm des Anschlags zum Befestigungsort realisiert werden. Dadurch ist es möglich, die Blattfeder bei der Montage sehr exakt auf dem Ventilsitz zu positionieren und zu fixieren. Dies führt dazu, dass die sich ergebende Überlappung zwischen dem Ventilsitz und der Blattfeder vermindert werden kann, weil auf eine größere Überlappung zum Ausgleich von Montageungenauigkeiten verzichtet werden kann. Durch die nunmehr sehr exakte Montage kann auch mit einer geringen Überlappung die Blattfeder zuverlässig schließend und dichtend an dem Ventilsitz anliegen.

Bei einer ölgeschmierten Vakuumpumpe wird im Betrieb, zusammen mit dem Gas, Öl aus der Ventilöffnung ausgestoßen, das sich auch auf dem Ventilsitz und der Blattfeder absetzt. Dieses Öl generiert beim Öffnen eine erhebliche Adhäsionskraft zwischen dem Ventilsitz und der Blattfeder. Eine hohe Adhäsionskraft hat den Nachteil, dass die Blattfeder erst bei höheren Auslassdrücken öffnet. Durch höhere Auslassdrücke kommt es zu einer verstärkten Expansion des Öl/Gas Gemisches am Ventilauslass, welches zu einer erhöhten Geräuschemission führt. Eine geringe Überlappung hat somit den Vorteil, dass auch die Adhäsionskraft zwischen dem Ventilsitz und der Blattfeder verringert ist. Die Blattfeder öffnet, aufgrund der verminderten Adhäsionskraft zwischen der Blattfeder und dem Ventilsitz, somit bereits bei niedrigeren Auslassdrücken, so dass die Geräuschemission vermindert werden kann.

Gemäß einer bevorzugten Ausgestaltung bildet der Federkörper einen Bügel aus, welcher radial beabstandet zu der Blattfeder vorgesehen ist und welcher den federkörperseitigen Anschlag aufweist. Ein Bügel gemäß der vorliegenden Erfindung ist ein konstruktives Element, welches in einem radialen Abstand die Blattfeder umgibt. Eine radiale Richtung im Sinne der vorliegenden Erfindung ist eine Richtung, die in der Ebene des Ventilsitzes, senkrecht zu einer Umfangsrichtung der Blattfeder verläuft. Der Vorteil einer solchen Ausgestaltung ist, dass der mechanische Anschlag unabhängig von der Blattfeder vorgesehen werden kann. Dadurch wird die Blattfeder nicht in Ihrer Öffnungsbewegung behindert.

Vorzugsweise ist der federkörperseitige Anschlag an dem Bügel, an einem dem Befestigungsort gegenüberliegenden Längsendes des Federkörpers, vorgesehen. Der federkörperseitige Anschlag hat damit einen maximal möglichen Abstand zu dem Befestigungsort, so dass der Hebelarm des federkörperseitigen Anschlags zu dem Befestigungsort maximal ist. Dies hat den Vorteil, dass die Blattfeder sehr genau auf dem Ventilsitz ausgerichtet werden kann.

In einer bevorzugten Ausgestaltung der Erfindung ist der federkörperseitige Anschlag eine Nase. Eine Nase im Sinne der vorliegenden Erfindung ist ein konstruktives Element, welches von dem Federkörper abragt.

Gemäß einer weiteren bevorzugten Ausgestaltung der Erfindung ist der Federkörper mittels einer Schraube an der Trennwand fixiert und der federkörperseitige Anschlag derart angeordnet, dass eine Bewegungsrichtung des Federkörpers in Richtung einer Anschraubdrehrichtung begrenzt ist. Dies hat den Vorteil, dass mit dem Anschrauben des Federkörpers der mechanische Anschlag in eine Anschlagposition verbracht wird.

Vorzugsweise weist der Federkörper an dem Befestigungsort des Federkörpers eine Befestigungsbohrung auf, welche zusammen mit einem Befestigungsmittel eine zusätzliche Anschlaganordnung ausbildet. Dadurch können weitere Bewegungsrichtungen des Federkörpers während der Montage begrenzt werden, wodurch die Blattfeder noch genauer auf dem Ventilsitz positionierbar ist.

In einer bevorzugten Ausgestaltung der Erfindung bildet der Federkörper einen federkörperseitigen Anschlagsabschnitt aus, welcher mit einem trennwandseitigen Anschlagsabschnitt der Trennwand als zusätzliche Anschlaganordnung mechanisch zusammenwirkt, so dass eine Bewegungsrichtung in Querrichtung der Blattfeder begrenzt ist. Der federkörperseitige Anschlagabschnitt ist ein Bereich des Federkörpers, welcher in mechanischen Kontakt mit dem trennwandseitigen Anschlagsabschnitt der Trennwand tritt. Dadurch können weitere Bewegungsrichtungen des Federkörpers begrenzt werden, wodurch die Blattfeder sehr genau auf dem Ventilsitz positionierbar ist.

Vorzugsweise sind in einem weiteren Ausführungsbeispiel in der Trennwand zwei Auslassventile ausgebildet. Das erste Auslassventil bildet einen Fluid-Auslass während eines Vorwärtslaufes und das zweite Auslassventil einen Fluid-Auslass während eines Rückwärtslaufes des Rotors. Dies hat den Vorteil, dass die Kfz-Vakuumpumpe in beiden Laufrichtungen des Rotors betrieben werden kann. Die beiden Blattfedern der Auslassventile sind dabei durch den gemeinsamen Federkörper gebildet. Dadurch wird die Anzahl an Teilen der Vakuumpumpe reduziert, so dass der Zusammenbau erleichtert wird und eine Verwechselung zwischen den Blattfedern ausgeschlossen wird.

Weitere Einzelheiten und Vorteile der vorliegenden Erfindung ergeben sich aus der nachfolgenden Beschreibung des Ausführungsbeispiels in Verbindung mit den Zeichnungen. In diesen zeigen:
- Figur 1:: Eine Kfz-Vakuumpumpe nach der vorliegenden Erfindung,
- Figur 2:: Eine Schnittdarstellung des Auslassventils der Kfz-Vakuumpumpe nach Fig. 1, und
- Figur 3:: Eine Draufsicht des Auslassventils der Kfz-Vakuumpumpe nach Fig. 1.

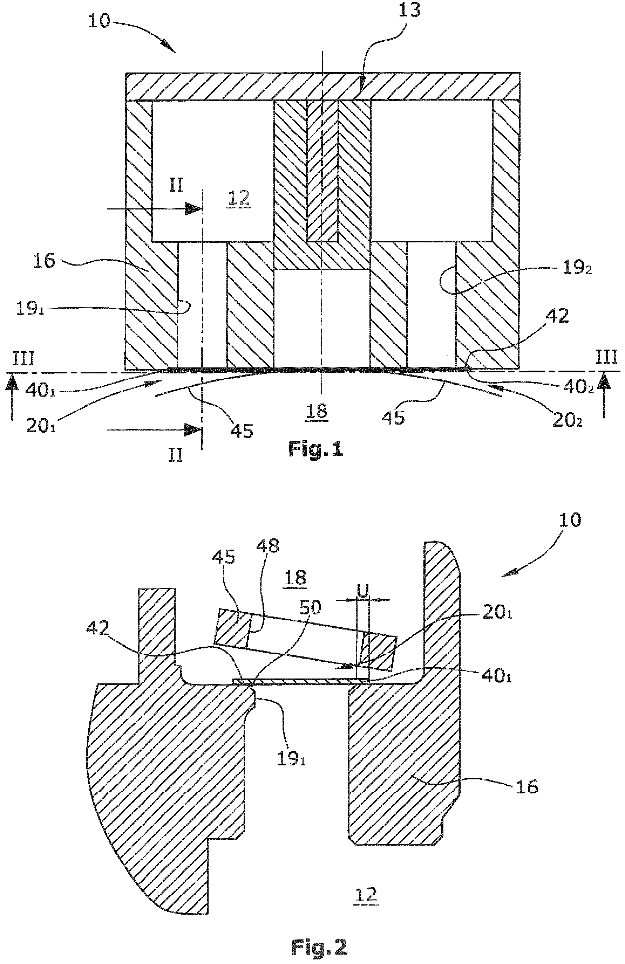

Figur 1 zeigt eine Kfz-Vakuumpumpe 10 nach der vorliegenden Erfindung. Die Vakuumpumpe 10 bildet einen Pumpraum 12 aus, in welchem ein Gas durch einen rotierenden Pumpenrotor 13 verdichtet wird. Eine Trennwand 16 trennt den Pumpraum 12 von einem Auslassraum 18 ab. In der Trennwand 16 ist eine nierenförmige Vorwärtslauf-Ventilöffnung 19₁ und eine nierenförmige Rückwärtslauf-Ventilöffnung 19₂ ausgebildet. Zur fluidischen Verbindung des Pumpraums 12 und des Auslassraums 18 weist die Vakuumpumpe 10 ein als Rückschlagventil ausgebildetes Vorwärtslauf-Auslassventil 20₁ und ein als Rückschlagventil ausgebildetes Rückwärtslauf-Auslassventil 20₂ auf. Die Auslassventile 20₁, 20₂ weisen als Ventilkörper nierenförmige Blattfedern 40₁, 40₂ auf, die in einem geschlossenem Zustand die Ventilöffnungen 19₁, 19₂ verschließen.

In Figur 2 ist eine Schnittdarstellung durch das Vorwärtslauf-Auslassventil 20₁ gezeigt. Das Vorwärtslauf-Auslassventil 20₁ ist gebildet aus der nierenförmigen Vorwärtslauf-Blattfeder 40₁, einem durch das Pumpengehäuse ausgebildeten Ventilsitz 42 und der den Pumpraum 12 und den Auslassraum 18 verbindenden nierenförmigen Vorwärtslauf-Ventilöffnung 19₁. Die Vorwärtslauf-Ventilöffnung 19₁ wird durch die Vorwärtslauf-Blattfeder 40₁, wie in Figur 2 dargestellt, verschlossen. In der Schließstellung liegt die Vorwärtslauf-Blattfeder 40₁ mit einer Überlappung U an dem Ventilsitz 42 dichtend an. In einer Öffnungsstellung ist die Vorwärtslauf-Blattfeder 40₁ derart gebogen, dass sie beabstandet zu dem Ventilsitz 42 ist.

Die Öffnungsbewegung der Vorwärtslauf-Blattfeder 40₁ wird dabei durch einen in Öffnungsrichtung der Vorwärtslauf-Blattfeder 40₁ und zum Ventilsitz 42 beabstandet vorgesehenen Ventilbegrenzer 45 begrenzt. Der Ventilbegrenzer 45 weist nierenförmige Ventilbegrenzeröffnungen 48 auf, welche in Ausflussrichtung des Fluides oberhalb der Blattfedern 40₁, 40₂ vorgesehen sind und die lateral durch die Blattfedern 40₁, 40₂ überragt werden. Diese Ventilbegrenzeröffnungen 48 ermöglichen ein leichteres Lösen der Blattfedern 40₁, 40₂ von dem Ventilbegrenzer 45 bei einem Schließvorgang. Um die Überlappung U möglichst klein zu halten und damit die Geräuschemission zu verringern, ist an einer inneren Umfangsfläche der Ventilöffnungen 19₁, 19₂ eine Fase 50 vorgesehen.

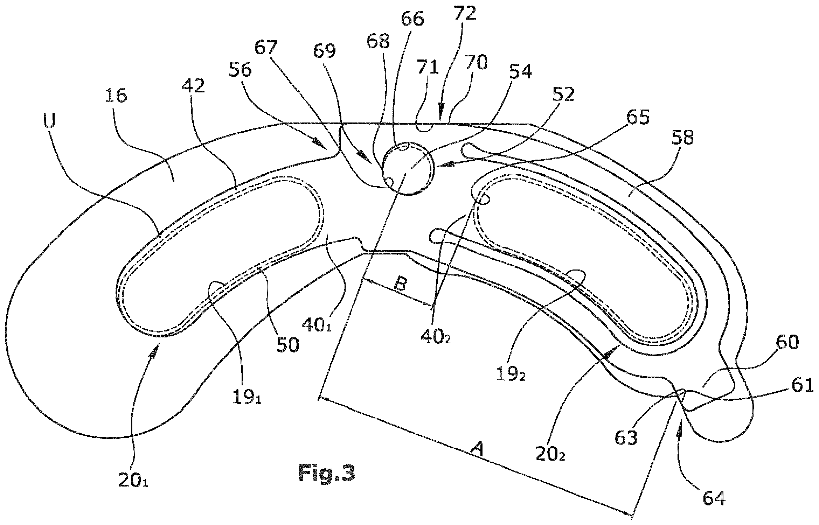

Figur 3 zeigt eine Draufsicht auf das Vorwärtslauf-Auslassventil 20₁ und das Rückwärtslauf-Auslassventil 20₂ nach Figur 1 ohne den Ventilbegrenzer 45. Die die Ventilkörper der Auslassventile 20₁, 20₂ bildenden Blattfedern 40₁, 40₂ sind in Ausflussrichtung des Fluides, beidseitig zu einem Befestigungsort 52 vorgesehen. An diesem Befestigungsort 52 fixiert ein Befestigungsmittel 54 einen einzigen gemeinsamen Federkörper 56, welcher die nierenförmige Vorwärtslauf-Blattfeder 40₁ und die nierenförmige Rückwärtslauf-Blattfeder 40₂ ausbildet.

Der Federkörper 56 bildet einen Bügel 58 aus, welcher radial beabstandet zu der Rückwärtslauf-Blattfeder 40₂ vorgesehen ist und diese Blattfeder 40₂ umgibt. Dieser Bügel 58 erlaubt eine Öffnungsbewegung der Rückwärtslauf-Blattfeder 40₂ ohne selbst eine Öffnungsbewegung zu vollziehen. An einer Längsseite des Bügels 58, welche maximal von einem Befestigungsort 52 beabstandet ist, ist eine Nase 60 ausgebildet, welche einen federkörperseitigen Anschlag 61 bildet. Der federkörperseitige Anschlag 61 wirkt mechanisch mit einem trennwandseitigen Anschlag 63 der Trennwand 16 zusammen. Der federkörperseitige Anschlag 61 und der trennwandseitige Anschlag 63 bilden zusammen eine erste Anschlaganordnung 64 aus, durch welche eine Verdrehung des Federkörpers 56 bei der Montage vermieden wird. Ein Abstand A des federkörperseitigen Anschlags 61 zum Befestigungsort 52 ist größer als ein Abstand B zwischen dem Befestigungsort 52 und einem dazu nächstliegenden Öffnungsrand 65 der Rückwärtslauf-Ventilöffnung 19₂.

Der Federkörper 56 bildet an dem Befestigungsort 52 des Federkörpers 56 eine Befestigungsbohrung 66 aus, welche einen federkörperseitigen Befestigungsanschlag 67 bildet. Der federkörperseitige Befestigungsanschlag 67 wirkt mechanisch mit dem Befestigungsmittel 54 zusammen, welcher einen befestigungsmittelseitigen Anschlag 68 ausbildet. Der federkörperseitige Befestigungsanschlag 67 und der befestigungsmittelseitige Anschlag 68 bilden zusammen eine zweite Anschlaganordnung 69 aus. Diese zweite Anschlaganordnung 69 verhindert eine Verschiebung des Federkörpers 56 in einer Längsrichtung des Federkörpers 56.

Der Federkörper 56 bildet in einem zu der Befestigungsbohrung 66 benachbarten Bereich einen federkörperseitigen Anschlagsabschnitt 70 aus, welcher mit einem trennwandseitigen Anschlagsabschnitt 71 als dritte Anschlaganordnung 72, zusammenwirkt. Diese dritte Anschlaganordnung 72 verhindert eine Verschiebung des Federkörpers 56 in einer Querrichtung zum Federkörper 56.

Durch diese drei Anschlaganordnungen 64, 69, 72 kann die Blattfeder 40₁, 40₂ sehr exakt auf dem Ventilsitz 42 positioniert werden, so dass auch bei minimal gewählten Montagetoleranzen eine ausreichende und abdichtende Überlappung U zwischen Ventilsitz 42 und Blattfeder 40₁, 40₂ stets gewährleistet werden kann.

### Bezugszeichenliste

- 10: Kfz-Vakuumpumpe
- 12: Pumpraum
- 13: Pumpenrotor
- 16: Trennwand
- 18: Auslassraum
- 19₁: Vorwärtslauf-Ventilöffnung
- 19₂: Rückwärtslauf-Ventilöffnung
- 20₁: Vorwärtslauf-Auslassventil
- 20₂: Rückwärtslauf-Auslassventil
- 40₁: Vorwärtslauf-Blattfeder
- 40₂: Rückwärtslauf-Blattfeder
- 42: Ventilsitz
- 45: Ventilbegrenzer
- 48: Ventilbegrenzeröffnung
- 50: Fase
- 52: Befestigungsort
- 54: Befestigungsmittel
- 56: Federkörper
- 58: Bügel
- 60: Nase
- 61: federkörperseitiger Anschlag
- 63: trennwandseitiger Anschlag
- 64: erste Anschlaganordnung
- 65: nächstliegender Öffnungsrand
- 66: Befestigungsbohrung
- 67: federkörperseitiger Befestigungsanschlag
- 68: befestigungsmittelseitiger Anschlag
- 69: zweite Anschlaganordnung
- 70: federkörperseitiger Anschlagsabschnitt
- 71: trennwandseitiger Anschlagsabschnitt
- 72: dritte Anschlaganordnung
- A: Abstand
- B: Abstand
- U: Überlappung

## Patentansprüche

1. Kfz-Vakuumpumpe (10) umfassend:
einen Pumpraum (12), in dem ein Pumpenrotor (13) verdichtend rotiert,
einen Auslassraum (18), in den das verdichtete Gas aus dem Pumpraum (12) austritt,
eine Trennwand (16), die den Pumpraum (12) von dem Auslassraum (18) trennt, und
wenigstens ein als Rückschlagventil ausgebildetes Auslassventil (20₁, 20₂) in der Trennwand (16), durch das das komprimierte Gas aus dem Pumpraum (12) in den Auslassraum (18) austritt,
wobei das Auslassventil (20₁, 20₂) von einer Ventilöffnung (19₁, 19₂) in der Trennwand (16), einem Ventilsitz (42), welcher um die Ventilöffnung (19₁, 19₂) herum vorgesehen ist und einer Blattfeder (40₁, 40₂) als Ventilkörper gebildet ist, wobei
die Blattfeder (40₁, 40₂) zwischen einer geschlossenen Stellung des Auslassventils (20₁, 20₂), in welcher die Blattfeder (40₁, 40₂) auf dem Ventilsitz (42) aufliegt, und einer geöffneten Stellung des Auslassventils (20₁, 20₂), in welcher die Blattfeder (40₁, 40₂) zu dem Ventilsitz (42) beabstandet ist, bewegbar ist, wobei
die Blattfeder (40₁, 40₂) durch einen Federkörper (56) gebildet ist, der einen Befestigungsort (52), an dem der Federkörper (56) an der Trennwand (16) fixiert ist, und einen federkörperseitigen Anschlag (61) aufweist, dessen Abstand (A) zum Befestigungsort (52) größer ist als ein Abstand (B) zwischen dem Befestigungsort (52) und einem dazu nächstliegenden Öffnungsrand (65) der Ventilöffnung (19₁, 19₂), und **dadurch gekennzeichnet dass**, der Anschlag (61) mit der Trennwand (16) derart mechanisch zusammenwirkt, dass eine Drehung der Blattfeder (40₁, 40₂) innerhalb der Ventilsitzebene begrenzt ist.

2. Kfz-Vakuumpumpe (10) nach Anspruch 1, **dadurch gekennzeichnet, dass** der Federkörper (56) einen Bügel (58) ausbildet, welcher radial beabstandet zu der Blattfeder (40₁, 40₂) vorgesehen ist, wobei der Bügel (58) den federkörperseitigen Anschlag (61) aufweist, welcher mit einem trennwandseitigen Anschlag (63) eine erste Anschlaganordnung (64) bildet.

3. Kfz-Vakuumpumpe (10) nach Anspruch 2, **dadurch gekennzeichnet, dass** der federkörperseitige Anschlag (61) an einem dem Befestigungsort (52) gegenüberliegenden Längsende des Federkörpers (56) am Bügel (58) vorgesehen ist.

4. Kfz-Vakuumpumpe (10) nach Anspruch 2 oder 3, **dadurch gekennzeichnet, dass** der federkörperseitige Anschlag (61) von einer Nase (60) gebildet ist.

5. Kfz-Vakuumpumpe (10) nach einem der vorherigen Ansprüche, **dadurch gekennzeichnet, dass** der Federkörper (56) mittels einer Schraube als Befestigungsmittel (54) an der Trennwand (16) fixiert ist, und dass der federkörperseitige Anschlag (61) eine Bewegungsrichtung des Federkörpers (56) in Richtung einer Anschraubdrehrichtung begrenzt.

6. Kfz-Vakuumpumpe (10) nach einem der vorherigen Ansprüche, **dadurch gekennzeichnet, dass** der Federkörper (56) an dem Befestigungsort (52) des Federkörpers (56) eine Befestigungsbohrung (66) aufweist, welche mit einem Befestigungsmittel (54) eine zweite Anschlaganordnung (69) ausbildet.

7. Kfz-Vakuumpumpe (10) nach einem der vorherigen Ansprüche, **dadurch gekennzeichnet, dass** der Federkörper (56) einen federkörperseitigen Anschlagsabschnitt (70) ausbildet, welcher mit einem trennwandseitigen Anschlagsabschnitt (71) der Trennwand (16) als dritte Anschlaganordnung zusammenwirkt, so dass eine Bewegungsrichtung in Querrichtung zur Blattfeder (40₁, 40₂) begrenzt ist.

8. Kfz-Vakuumpumpe (10) nach einem der vorherigen Ansprüche, **dadurch gekennzeichnet, dass** in der Trennwand (16) zwei Auslassventile (20₁, 20₂) ausgebildet sind, wobei die beiden Blattfedern (40₁, 40₂) der Auslassventile (20₁, 20₂) durch den gemeinsamen Federkörper (56) gebildet sind.

## Claims

1. Automobile vacuum pump (10) comprising:
a pump chamber (12) for compressive rotation of a pump rotor (13) therein,
an outlet chamber (18) into which the compressed gas is discharged from the pump chamber (12),
a partition wall (16) separating the pump chamber (12) from the outlet chamber (18), and
at least one outlet valve (20₁, 20₂) designed as a back-check valve and arranged in the partition wall (16), the compressed gas being discharged from the pump chamber (12) into the outlet chamber (18) via said outlet valve,
the outlet valve (20₁, 20₂) being defined by a valve opening (19₁, 19₂) in the partition wall (16), a valve seat (42) provided around the valve opening (19₁, 19₂), and a leaf spring (40₁, 40₂) as a valve body,
wherein
the leaf spring (40₁, 40₂) is movable between a closed position of the outlet valve (20₁, 20₂) in which the leaf spring (40₁, 40₂) rests on the valve seat (42), and an opened position of the outlet valve (20₁, 20₂) in which the leaf spring (40₁, 40₂) is spaced from the valve seat (42),
wherein the leaf spring (40₁, 40₂) is defined by a spring body (56) which comprises a fastening site (52) where the spring body (56) is fixed to the partition wall (16), and a spring-body-side stopper (61) whose distance (A) to the fastening site (52) is larger than a distance (B) between the fastening site (52) and an opening edge (65) of the valve opening (19₁, 19₂) that is closest to the fastening site, and **characterized in that** the stopper (61) cooperates mechanically with the partition wall (16) in such a manner that a rotation of the leaf spring (40₁, 40₂) within the plane of the valve seat is restricted.

2. The automobile vacuum pump (10) according to claim 1, **characterized in that** the spring body (56) forms a bracket (58) which is provided at a radial distance to the leaf spring (40₁, 40₂), wherein the bracket (58) comprises said spring-body-side stopper (61) which together with a partition-wall-side stopper (63) forms a first stopper arrangement (64).

3. The automobile vacuum pump (10) according to claim 2, **characterized in that** the spring-body-side stopper (61) is provided on the bracket (58) on a longitudinal end of the spring body (56) opposite to the fastening site (52).

4. The automobile vacuum pump (10) according to claim 2 or 3, **characterized in that** the spring-body-side stopper (61) is defined by a nose (60).

5. The automobile vacuum pump (10) according to any one of the preceding claims, **characterized in that** the spring body (56) is fixed to the partition wall (16) by use of a screw as a fastening means (54), and that the spring-body-side stopper (61) delimits a movement direction of the spring body (56) in the direction of a screw-on rotational direction.

6. The automobile vacuum pump (10) according to any one of the preceding claims, **characterized in that** the spring body (56) comprises, at the fastening site (52) of the spring body (56), a fastening bore (66) which together with a fastening means (54) forms a second stopper arrangement (69).

7. The automobile vacuum pump (10) according to any one of the preceding claims, **characterized in that** the spring body (56) forms a spring-body-side stopper portion (70) which, acting as a third stopper arrangement, cooperates with a partition-wall-side stopper portion (71) of the partition wall (16) so that a movement direction in transverse direction to the leaf spring (40₁, 40₂) is limited.

8. The automobile vacuum pump (10) according to any one of the preceding claims, **characterized in that** two outlet valves (20₁, 20₂) are located in the partition wall (16), wherein the two leaf springs (40₁, 40₂) of the outlet valves (20₁, 20₂) are defined by the common spring body (56).

## Revendications

1. Pompe à vide (10) pour véhicule automobile comprenant:
une chambre de pompe (12) dans laquelle un rotor de pompe (13) tourne pour compression,
un espace de sortie (18) dans lequel le gaz comprimé sort de l'espace de pompe (12),
une paroi de séparation (16) qui sépare la chambre de pompe (12) de la chambre de sortie (18), et
au moins une soupape de sortie en forme d'un clapet anti-retour (20₁, 20₂) dans la paroi de séparation (16) par laquelle le gaz comprimé sort de la chambre de pompe (12) dans la chambre de sortie (18), la soupape de sortie (20₁, 20₂) étant formée par une ouverture de soupape (19₁, 19₂) dans la paroi de séparation (16), un siège de soupape (42) autour de l'ouverture de soupape (19₁, 19₂) et un ressort à lame (40₁, 40₂) faisant office d'un corps de soupape, dans lequel
le ressort à lame (40₁, 40₂) pouvant être déplacé entre une position fermée de la soupape d'échappement (20₁, 20₂), dans laquelle le ressort à lame (40₁, 40₂) s'appuie sur le siège de soupape (42), et une position ouverte de la soupape de sortie (20₁, 20₂), dans laquelle le ressort à lame (40₁, 40₂) est espacé du siège de soupape (42),
le ressort à lame (40₁, 40₂) étant formé par un corps de ressort (56) qui présente un point de fixation (52) auquel le corps de ressort (56) est fixé à la paroi de séparation (16), et une butée (61), côté corps de ressort, dont la distance (A) du point de fixation (52) est supérieure à une distance (B) entre le point de fixation (52) et un bord d'ouverture (65) de l'ouverture de soupape (19₁, 19₂) le plus proche à celui-ci,
et **caractérisée en ce que** la butée (61) coopère mécaniquement avec la paroi de séparation (16) de sorte qu'une rotation du ressort à lame (40₁, 40₂) dans le plan du siège de soupape soit limitée.

2. Pompe à vide (10) pour véhicule automobile selon la revendication 1, **caractérisée en ce que** le corps de ressort (56) forme un support (58) écarté radialement du ressort à lame (40₁, 40₂), le support (58) ayant la butée (61), côté corps du ressort, qui forme un premier agencement de butée (64) avec une butée (63), côté paroi de séparation.

3. Pompe à vide (10) pour véhicule automobile, selon la revendication 2, **caractérisée en ce que** la butée (61), côté corps de ressort, est prévue sur le support (58) à une extrémité longitudinale du corps de ressort (56) opposée au point de fixation (52).

4. Pompe à vide (10) pour véhicule automobile selon la revendication 2 ou 3, **caractérisée en ce que** la butée (61), côté corps de ressort, est formée par un nez (60).

5. Pompe à vide (10) pour véhicule automobile selon l'une quelconque des revendications précédentes, **caractérisée en ce que** le corps de ressort (56) est fixé à la parois de séparation (16) par une vis comme moyen de fixation (54), et **en ce que** la butée (61), côté corps de ressort, limite un sens de déplacement du corps de ressort (56) dans le sens d'un sens de vissage.

6. Pompe à vide (10) pour véhicule automobile selon l'une quelconque des revendications précédentes, **caractérisée en ce que** le corps de ressort (56) comprend un alésage de fixation (66) au point de fixation (52) du corps de ressort (56) qui, avec un moyen de fixation (54), forme un deuxième agencement de butée (69).

7. Pompe à vide (10) pour véhicule automobile selon l'une quelconque des revendications précédentes, **caractérisée en ce que** le corps de ressort (56) forme une section de butée (70), côté corps de ressort, qui coopère avec une section de butée (71), côté paroi de séparation, de la paroi de séparation (16) comme troisième agencement de butée, de sorte qu'un sens de déplacement dans la direction transversale par rapport au ressort à lame (40₁, 40₂) soit limitée.

8. Pompe à vide (10) pour véhicule automobile selon l'une quelconque des revendications précédentes, **caractérisée en ce que** deux soupapes de sortie (20₁, 20₂) sont formées dans la paroi de séparation (16), les deux ressorts à lames (40₁, 40₂) des soupapes d'échappement (20₁, 20₂) étant formés par le corps de ressort (56) commun.
